# EUROPEAN PATENT APPLICATION

(11) **EP 4 564 385 A1**
(43) Date of publication of application: **04.06.2025**
(21) Application number: 24200499.2
(22) Date of filing: 16.09.2024
(51) Int. Cl.: H01G 4/012, H01G 4/232, H01G 4/30

(54) **MULTILAYER ELECTRONIC COMPONENT**

(30) Priority: 30.11.2023 KR 20230171593; 18.03.2024 KR 20240037335
(71) Applicant: Samsung Electro-Mechanics Co., Ltd., Gyeonggi-do (KR)
(72) Inventor: Jun, Ho In, Suwon-si, Gyeonggi-do (KR)
(74) Representative: Grünecker Patent- und Rechtsanwälte PartG mbB

(57) **Abstract**

A multilayer electronic component includes: a body including a stacked portion including a dielectric layer and first and second internal electrodes alternately disposed with the dielectric layer interposed therebetween, first and second connection electrodes connected to opposing respective ends of the first and second internal electrodes in two orthogonal directions, and margin portions respectively disposed on the first and second connection electrodes; and first and second external electrodes respectively disposed on the body and connected to the first and second connection electrodes. The first connection electrode includes a first main portion in contact with at least a portion of the first internal electrode and a first lead-out portion extending from the first main portion, and the second connection electrode includes a second main portion in contact with at least a portion of the second internal electrode and a second lead-out portion extending from the second main portion.

## Description

### CROSS-REFERENCE TO RELATED APPLICATION(S)

This application claims benefit of priority to Korean Patent Applications Nos. 10-2023-0171593 filed on November 30, 2023 and 10-2024-0037335 filed on March 18, 2024 in the Korean Intellectual Property Office, the disclosure of which are incorporated herein by reference in its entirety.

### TECHNICAL FIELD

The present disclosure relates to a multilayer electronic component.

### BACKGROUND

A multilayer ceramic capacitor (MLCC), a multilayer electronic component, may be a chip-type condenser mounted on an electronic product or a printed circuit board, such as an imaging device, including a liquid crystal display (LCD) or a plasma display panel (PDP), a mobile device such as a smartphone or a mobile phone, a computer, an on-board charger (OBC) of an electric vehicle, a circuit such as a direct-current to direct-current (DC-DC) converter, an infotainment system for an electric vehicle, or an internal combustion engine vehicle, to serve to charge or discharge electricity therein or therefrom.

As each of various electronic devices and electronic products has a higher integration level, a passive component such as the multilayer ceramic capacitor (MLCC) has been thinner and smaller. In addition, the electronic device or the electronic product is often exposed to a harsh environment such as a high temperature, a high pressure, or a high vibration environment. Accordingly, there is an increasing demand for a multilayer ceramic capacitor (MLCC) having a lower equivalent series inductance (ESL).

One of several methods to lower the ESL of the MLCC may be a method of lowering an entire inductance of the capacitor by disposing three or more terminal electrodes to thus offset a magnetic field occurring by a current flowing in the MLCC.

In order to form such a multi-terminal capacitor, there is a need for a lead-out portion formed on each of internal electrodes for internal electrode to be connected to several terminals of the external electrode, as shown in Patent Document 1. However, this lead-out portion of the internal electrode may serve as a major path for external moisture or plating solution penetration to cause lower moisture resistance reliability of a multilayer electronic component.

Accordingly, there is a need for a structural improvement of the multilayer electronic component for securing sufficient effective capacitance and improving the moisture resistance reliability, while lowering the ESL.

### SUMMARY

An aspect of the present disclosure is to improve lower moisture resistance reliability of a multilayer electronic component that may occur when the component uses a multi-terminal structure having three or more terminals to lower an equivalent series inductance (ESL).

An aspect of the present disclosure is to improve lower connectivity between the external and internal electrodes of a multilayer electronic component that may occur when the component uses the multi-terminal structure having three or more terminals to lower ESL.

However, the present disclosure is not limited to the description above, and may be more readily understood in the description of exemplary embodiments of the present disclosure.

According to an aspect of the present disclosure, a multilayer electronic component includes: a body including a stacked portion including a dielectric layer and a first internal electrode and a second internal electrode alternately disposed in a first direction while having the dielectric layer interposed therebetween, first connection electrodes respectively connected to the first internal electrode on two surfaces of the stacked portion that oppose each other in a second direction perpendicular to the first direction, second connection electrodes respectively connected to the second internal electrode on two surfaces of the stacked portion that oppose each other in a third direction perpendicular to the first or second direction, and margin portions respectively disposed on the first connection electrodes and the second connection electrodes; first external electrodes respectively disposed on the body and connected to the first connection electrodes; and second external electrodes respectively disposed on the body and connected to the second connection electrodes, wherein the first connection electrode includes a first main portion in contact with at least a portion of the first internal electrode and a first lead-out portion extending from the first main portion in the first direction, and the second connection electrode includes a second main portion in contact with at least a portion of the second internal electrode and a second lead-out portion extending from the second main portion in the first direction.

According to another aspect of the present disclosure, a multilayer electronic component includes: a body including a plurality of dielectric layers and a plurality of first and second internal electrodes alternately stacked in a first direction while having the respective dielectric layers interposed therebetween, opposing ends of each of the first and second internal electrodes being spaced apart from outer surfaces of the body; first connection electrodes respectively connected to two ends of the first internal electrodes opposing each other in a second direction perpendicular to the first direction, each of the first connection electrodes being embedded in the body and having a portion exposed to one of the outer surfaces of the body; second connection electrodes respectively connected to two ends of the second internal electrodes opposing each other in a third direction perpendicular to the first or second direction, each of the second connection electrodes being embedded in the body and having a portion exposed to one of the outer surfaces of the body; first external electrodes respectively disposed on the body and connected to the exposed portion of the first connection electrodes; and second external electrodes respectively disposed on the body and connected to the exposed portion of the second connection electrodes.

According to still another aspect of the present disclosure, a multilayer electronic component includes: a body including a dielectric layer and first and second internal electrodes alternately disposed in a first direction while having the dielectric layer interposed therebetween; a pair of first connection electrodes extending in the first direction and connected to opposing ends of the first internal electrode, respectively, in a second direction perpendicular to the first direction; a pair of second connection electrodes extending in the first direction and connected to opposing ends of the second internal electrode, respectively, in a third direction perpendicular to the first and second directions; a pair of first external electrodes disposed on the body and connected to the first internal electrode through the pair of first connection electrodes, respectively; and a pair of second external electrodes disposed on the body and connected to the second internal electrode through the pair of second connection electrodes, respectively, wherein shapes of the pair of first connection electrodes are symmetric to each other about a center of the body, and shapes of the pair of second connection electrodes are symmetric to each other about the center of the body.

### BRIEF DESCRIPTION OF DRAWINGS

The above and other aspects, features and advantages of the present disclosure will be more clearly understood from the following detailed description taken in conjunction with the accompanying drawings, in which:
FIG. 1 is a perspective view schematically showing a multilayer electronic component according to an exemplary embodiment of the present disclosure;
FIG. 2 is a perspective view schematically showing a component body according to an exemplary embodiment of the present disclosure;
FIG. 3 is a perspective view of the body according to an exemplary embodiment, in which its configuration except for connection electrodes is made transparent to show a shape of the connection electrodes;
FIG. 4 is a perspective view schematically showing a stacked portion according to an exemplary embodiment of the present disclosure;
FIG. 5 is an exploded perspective view schematically showing the stacked portion according to an exemplary embodiment of the present disclosure;
FIGS. 6A and 6B are perspective views each showing a shape of the connection electrode according to an exemplary embodiment;
FIG. 7 is an exploded perspective view schematically showing a coupling relationship between a first connection electrode and the stacked portion according to an exemplary embodiment;
FIG. 8 is an exploded perspective view schematically showing a coupling relationship between a second connection electrode and the stacked portion according to an exemplary embodiment;
FIGS. 9A and 9B are plan views of the multilayer electronic component viewed from a second direction, and FIGS. 9C and 9D are plan views of the multilayer electronic component viewed from a third direction;
FIG. 10 is a cross-sectional view taken along line I-I' of FIG. 1, exposing a first internal electrode;
FIG. 11 is a cross-sectional view taken along line I-I' of FIG. 1, exposing a second internal electrode;
FIG. 12 is a cross-sectional view taken along line II-II' of FIG. 1;
FIG. 13 is a cross-sectional view taken along line III-III' of FIG. 1;
FIG. 14 is a cross-sectional view taken along line IV-IV' of FIG. 1;
FIG. 15 is a perspective view schematically showing a multilayer electronic component according to a first modified example;
FIG. 16 is a perspective view schematically showing a component body according to the first modified example;
FIGS. 17A and 17B are perspective views each schematically showing a shape of a connection electrode according to the first modified example;
FIG. 18 is an exploded perspective view schematically showing a coupling relationship between the connection electrode and a stacked portion according to the first modified example;
FIG. 19 is a perspective view schematically showing a component body according to a second modified example;
FIGS. 20A and 20B are perspective views each schematically showing a shape of a connection electrode according to the second modified example;
FIG. 21 is an exploded perspective view schematically showing a coupling relationship between the connection electrode and a stacked portion according to the second modified example;
FIG. 22 is a perspective view schematically showing a multilayer electronic component according to the second modified example;
FIG. 23 is a perspective view schematically showing a component body according to a third modified example;
FIGS. 24A and 24B are perspective views each schematically showing a shape of a connection electrode according to the third modified example;
FIG. 25 is an exploded perspective view schematically showing a coupling relationship between the connection electrode and a stacked portion according to the third modified example;
FIG. 26 is a perspective view schematically showing a multilayer electronic component according to the third modified example;
FIG. 27 is a perspective view schematically showing a stacked portion according to an application example;
FIG. 28 is a plan view showing a shape of an internal electrode according to the application example; and
FIG. 29 is an exploded perspective view schematically showing shapes of a dielectric layer and the internal electrode included in the stacked portion according to the application example.

### DETAILED DESCRIPTION

Hereinafter, exemplary embodiments of the present disclosure will now be described in detail with reference to the accompanying drawings. The exemplary embodiments of the present disclosure may be modified in many different forms and the scope of the present disclosure should not be limited to the exemplary embodiments set forth herein. In addition, the exemplary embodiments of the present disclosure are provided to more fully explain the present disclosure to those skilled in the art. In the drawings, the shapes and dimensions may thus be exaggerated for clarity, and the same reference numerals are used to designate the same or like components.

Further, in the accompanying drawings, portions unrelated to the description will be omitted in order to clearly describe the present disclosure, and the size and thickness of each component shown in the drawings are arbitrarily shown for convenience of explanation. Therefore, the present disclosure is not necessarily limited to contents shown in the drawings. Furthermore, like reference numerals will be used to designate like components having similar functions throughout the drawings within the scope of the present disclosure. In addition, throughout the specification, when an element "includes" another component, it is to be understood that the element may further include a third component rather than excluding the third component, unless explicitly described to the contrary.

In the drawings, a first direction defines a direction in which internal electrodes and dielectric layers are stacked.

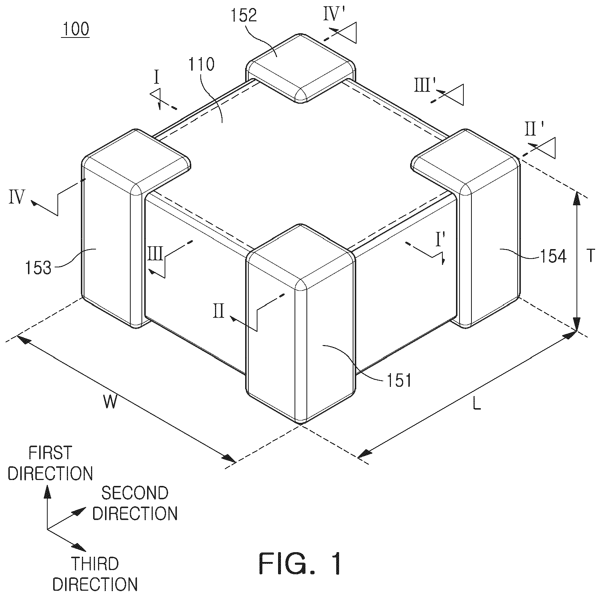

FIG. 1 is a perspective view schematically showing a multilayer electronic component according to an exemplary embodiment of the present disclosure.

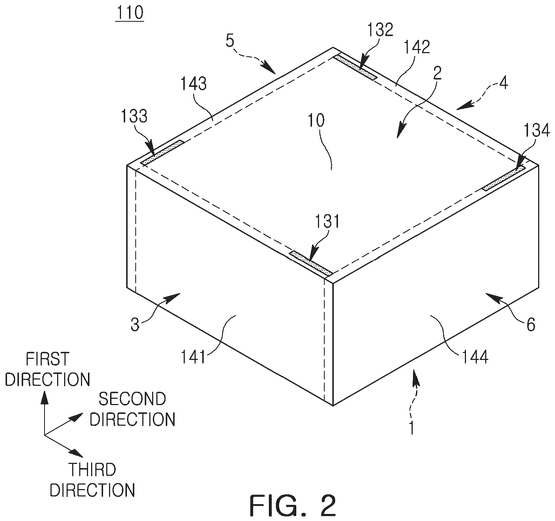

FIG. 2 is a perspective view schematically showing a component body according to an exemplary embodiment of the present disclosure.

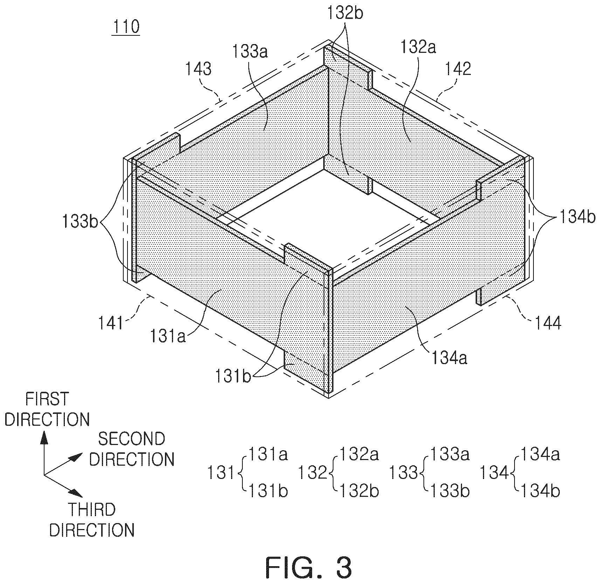

FIG. 3 is a perspective view of the body according to an exemplary embodiment, in which its configuration except for connection electrodes is made transparent to show a shape of the connection electrodes.

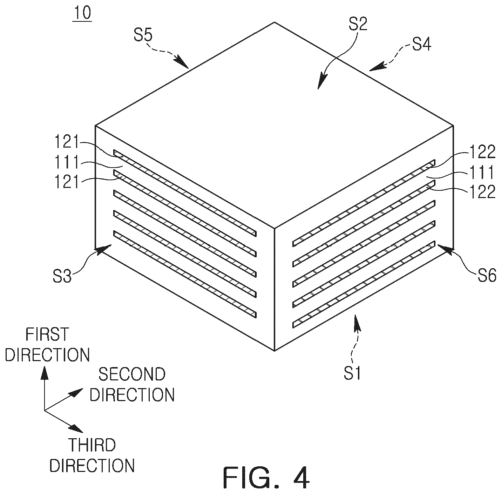

FIG. 4 is a perspective view schematically showing a stacked portion according to an exemplary embodiment of the present disclosure.

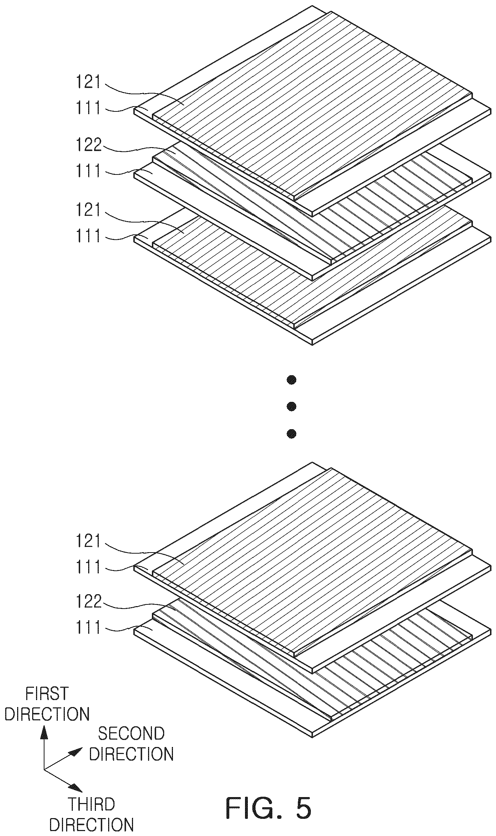

FIG. 5 is an exploded perspective view schematically showing the stacked portion according to an exemplary embodiment of the present disclosure.

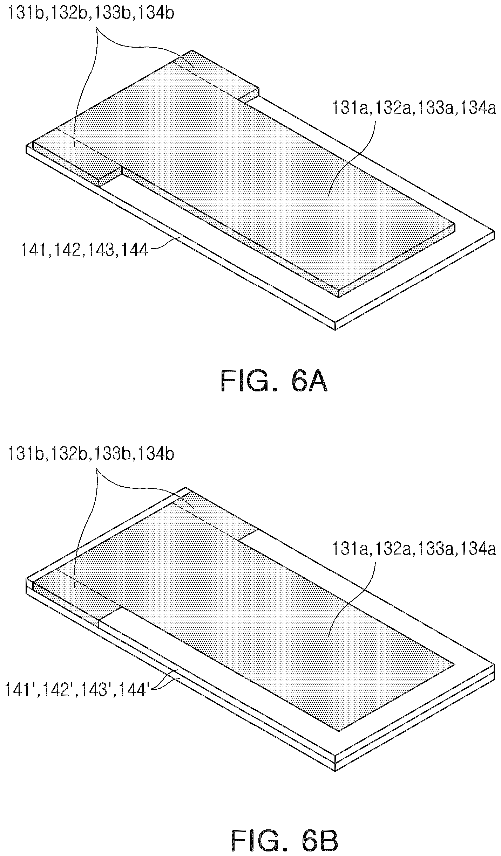

FIGS. 6A and 6B are perspective views each showing a shape of the connection electrode according to an exemplary embodiment.

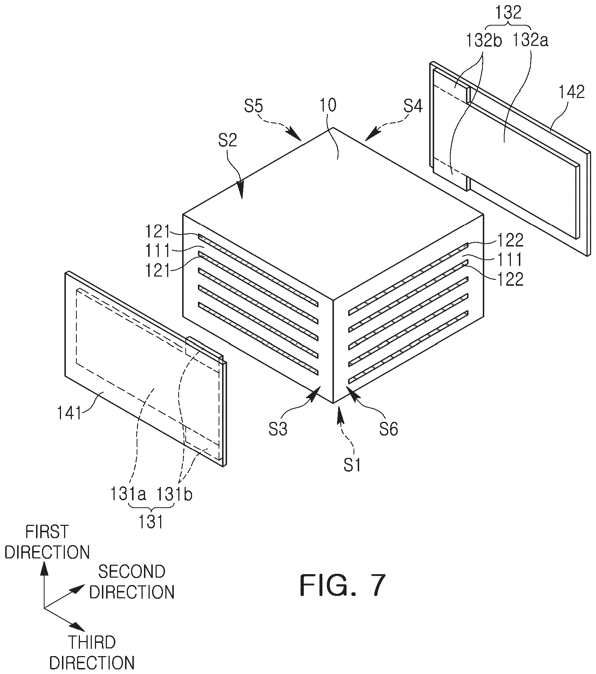

FIG. 7 is an exploded perspective view schematically showing a coupling relationship between a first connection electrode and the stacked portion according to an exemplary embodiment.

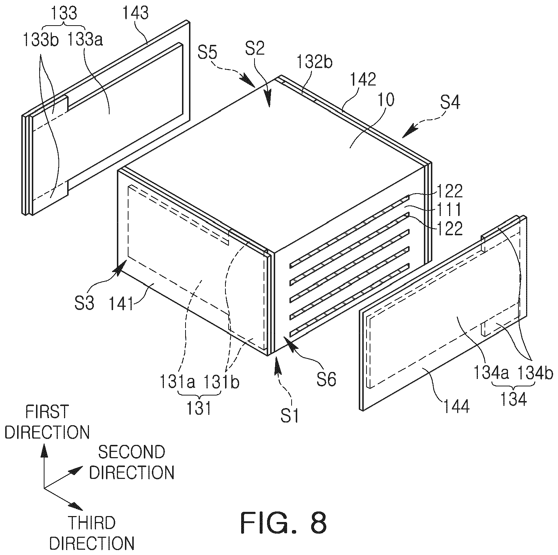

FIG. 8 is an exploded perspective view schematically showing a coupling relationship between a second connection electrode and the stacked portion according to an exemplary embodiment.

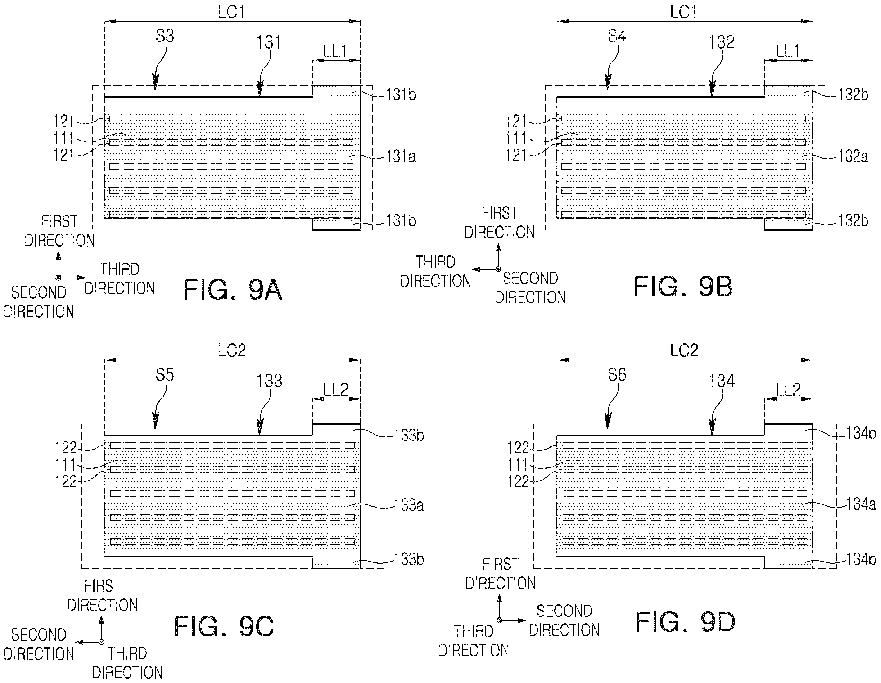

FIGS. 9A and 9B are plan views of the multilayer electronic component viewed from a second direction, and

FIGS. 9C and 9D are plan views of the multilayer electronic component viewed from a third direction.

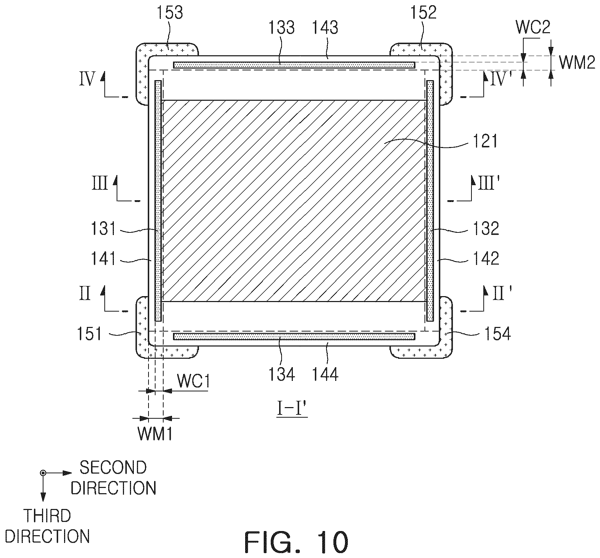

FIG. 10 is a cross-sectional view taken along line I-I' of FIG. 1, exposing a first internal electrode.

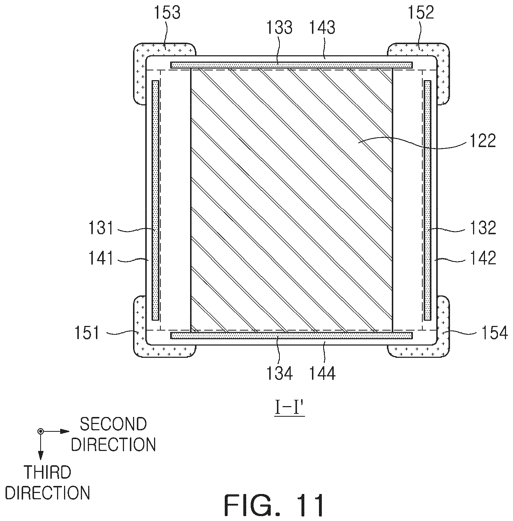

FIG. 11 is a cross-sectional view taken along line I-I' of FIG. 1, exposing a second internal electrode.

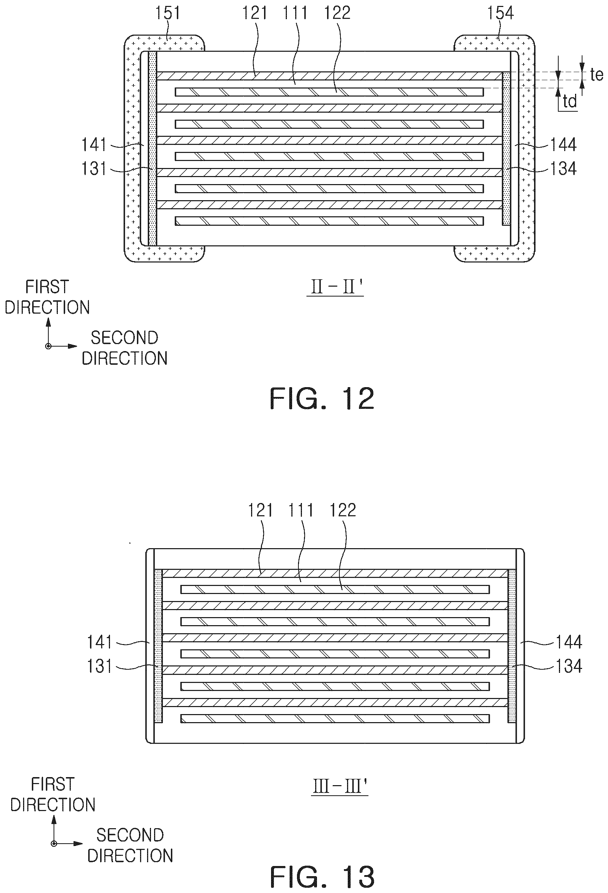

FIG. 12 is a cross-sectional view taken along line II-II' of FIG. 1.

FIG. 13 is a cross-sectional view taken along line III-III' of FIG. 1.

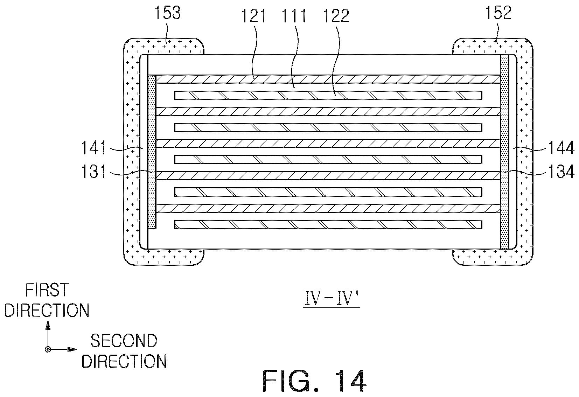

FIG. 14 is a cross-sectional view taken along line IV-IV' of FIG. 1.

Hereinafter, a multilayer electronic component 100 according to an exemplary embodiment of the present disclosure is described in detail with reference to FIGS. 1 through 14. Features of the multilayer electronic component 100 according to an exemplary embodiment to be described below may also be applied to first to the third modified examples described below, unless an opposite or contradictory description is provided therein.

The multilayer electronic component 100 according to an exemplary embodiment of the present disclosure may include: a body 110 including a stacked portion 10 including a dielectric layer 111 and a first internal electrode 121 and a second internal electrode 122 alternately disposed in the first direction while having the dielectric layer 111 interposed therebetween, first connection electrodes 131 and 132 respectively connected to the first internal electrode 121 on two surfaces S3 and S4 of the stacked portion 10 that oppose each other in a second direction perpendicular to the first direction, second connection electrodes 133 and 134 respectively connected to the second internal electrode 122 on two surfaces S5 and S6 of the stacked portion 10 that oppose each other in a third direction perpendicular to the first or second direction, and margin portions 141, 142, 143, and 144 respectively disposed on the first connection electrodes 131 and 132 and the second connection electrodes 133 and 134; first external electrodes 151 and 152 respectively disposed on the body 110 and connected to the first connection electrodes 131 and 132; and second external electrodes 153 and 154 respectively disposed on the body 110 and connected to the second connection electrodes 133 and 134, wherein the first connection electrode 131 or 132 includes a first main portion 131a or 132a in contact with at least a portion of the first internal electrode 121 and a first lead-out portion 131b or 132b extending from the first main portion 131a or 132a in the first direction, and the second connection electrode 133 or 134 includes a second main portion 133a or 134a in contact with at least a portion of the second internal electrode 122 and a second lead-out portion 133b or 134b extending from the second main portion 133a or 134a in the first direction.

The body 110 may include the stacked portion 10 including the dielectric layer 111 and the first internal electrode 121 and the second internal electrode 122 alternately disposed in the first direction while having the dielectric layer 111 interposed therebetween, the first connection electrodes 131 and 132 respectively connected to the first internal electrode 121 on the two surfaces S3 and S4 of the stacked portion 10 that oppose each other in the second direction perpendicular to the first direction, the second connection electrodes 133 and 134 respectively connected to the second internal electrode 122 on the two surfaces S5 and S6 of the stacked portion 10 that oppose each other in the third direction perpendicular to the first direction or the second direction, and the margin portions 141, 142, 143, and 144 respectively disposed on the first connection electrodes 131 and 132 and the second connection electrodes 133 and 134.

Referring to FIG. 2, the body 110 may include the stacked portion 10 and the connection electrodes 131, 132, 133, and 134 disposed on the stacked portion 10 and the margin portions 141, 142, 143, and 144. The body 110 may include first and second surfaces 1 and 2 opposing each other in the first direction, third and fourth surfaces 3 and 4 opposing each other in the second direction, and fifth and sixth surfaces 5 and 6 opposing each other in the third direction.

Referring to FIGS. 4 and 5, the stacked portion 10 may include the dielectric layer 111 and the internal electrodes 121 and 122. In detail, the dielectric layer 111 and the first or second internal electrode 121 or 122 may be alternately disposed in the first direction.

Referring to FIG. 4, the stacked portion 10 may include the two surfaces S1 and S2 opposing each other in the first direction, the two surfaces S3 and S4 opposing each other in the second direction perpendicular to the first direction, and the two surfaces S5 and S6 opposing each other in the third direction perpendicular to the first direction or the second direction. Among these faces S1, S2, S3, S4, S5, and S6 of the stacked portion 10, the two surfaces S1 and S2 of the stacked portion 10 that oppose each other in the first direction may respectively form portions of both surfaces 1 and 2 of the body 110 that oppose each other in the first direction, and the connection electrodes 131, 132, 133, and 134 may respectively be disposed on the two surfaces S3 and S4 of the stacked portion 10 that oppose each other in the second direction and the two surfaces S5 and S6 of the stacked portion 10 that oppose each other in the third direction.

The stacked portion 10 may include the plurality of dielectric layers 111, the plurality of first internal electrodes 121, and the plurality of second internal electrodes 122. The plurality of dielectric layers 111 included in the stacked portion 10 may already be sintered, and the adjacent dielectric layers 111 may thus be integrated with each other, thus making it difficult to confirm a boundary therebetween without using a scanning electron microscope (SEM).

A material included in the dielectric layer 111 is not particularly limited as long as the multilayer electronic component acquires sufficient capacitance. For example, the dielectric layer 111 may use a barium titanate (BaTiOs) dielectric material, a CaZrOs-based paraelectric dielectric material, or the like. For example, the dielectric layer 111 may use a barium titanate (BaTiOs) dielectric material, a CaZrO₃-based paraelectric dielectric material, or the like. For example, the barium titanate (BaTiOs) dielectric material may be one or more of BaTiO₃ or (Ba₁₋ₓCaₓ) TiOs (0<x<1), Ba (Ti_{1-y}Ca_{y})O₃ (0<y<1), (Ba₁₋ₓCaₓ) (Ti_{1-y}Zr_{y})O₃ (0<x<1, 0<y<1), or Ba (Ti_{1-y}Zr_{y})O₃ (0<y<1), and the CaZrO₃-based paraelectric dielectric material may be (Ca₁₋ₓSrₓ)(Zr_{1-y}Ti_{y})O₃ (0<x<1, 0<y<1).

In addition, various ceramic additives, organic solvents, binders, dispersants and the like, may be added to the dielectric layer 111 based on a purpose of the present disclosure.

An average thickness td of the dielectric layers 111 is not particularly limited.

The average thickness td of the dielectric layers 111 may be 0.35 um or less for the miniaturization and higher capacity of the multilayer electronic component 100, and the average thickness td of the dielectric layers 111 may be 3 um or more to improve reliability of the multilayer electronic component 100 under high temperature and pressure.

The average thickness td of the dielectric layers 111 may be measured by scanning an image of a cross section of the multilayer electronic component 100 in a first-second direction by using the scanning electron microscope (SEM).

For example, the average thickness td of the dielectric layers 111 may be an average value acquired by measuring their thicknesses at five equally spaced points after making, as a reference point, a point where a center line of the body in the second direction and a center line of the body in the first direction meet each other, and then determining the five equally spaced points including two points on the left and two points on the right, centered on this reference point, in the dielectric layers having a total of five floors including upper two floors and lower two floors, centered on the dielectric layer of one floor that is disposed at the point where the center line of the body in the length direction and the center line of the body in the thickness direction meet each other, among the dielectric layers extracted from the image of the cross section of the multilayer electronic component 100 in the first-second direction that is polished to the center of the multilayer electronic component 100 in the third direction, which is scanned using the scanning electron microscope (SEM).

The internal electrodes 121 and 122 may include the first internal electrode 121 and the second internal electrode 122.

The first and second internal electrodes 121 and 122 may be alternately disposed to oppose each other while having the dielectric layer 111 interposed therebetween, the first internal electrode 121 may be exposed to the two surfaces S3 and S4 of the stacked portion 10 that oppose each other in the second direction, and the second internal electrode 122 may be exposed to the two surfaces S5 and S6 of the stacked portion 10 that oppose each other in the third direction. Accordingly, the first internal electrode 121 may be connected to the first connection electrodes 131 and 132 on the two surfaces S3 and S4 of the stacked portion 10 that oppose each other in the second direction, and the second internal electrode 122 may be connected to the second connection electrodes 133 and 134 on the two surfaces S5 and S6 of the stacked portion 10 that oppose each other in the third direction.

Referring to FIGS. 4 and 5, the first internal electrode 121 may be spaced apart from the two surfaces S5 and S6 of the stacked portion 10 that oppose each other in the third direction, and the second internal electrode 122 may be spaced apart from the two surfaces S3 and S4 of the stacked portion 10 that oppose each other in the second direction. Accordingly, the first and second internal electrodes 121 and 122 may be electrically insulated from each other by the dielectric layer 111 interposed therebetween.

The stacked portion 10 may be formed by alternately stacking a ceramic green sheet on which the first internal electrode 121 is printed and a ceramic green sheet on which the second internal electrode 122 is printed, and then sintering the same.

A material included in the internal electrode 121 or 122 is not particularly limited, and may use a material having excellent electrical conductivity. For example, the internal electrode 121 or 122 may include at least one of nickel (Ni), copper (Cu), palladium (Pd), silver (Ag), gold (Au), platinum (Pt), tin (Sn), tungsten (W), titanium (Ti), and an alloy thereof.

In addition, the internal electrode 121 or 122 may be formed by printing, on the ceramic green sheet, a conductive paste for an internal electrode including at least one of nickel (Ni), copper (Cu), palladium (Pd), silver (Ag), gold (Au), platinum (Pt), tin (Sn), tungsten (W), titanium (Ti), and an alloy thereof. A method of printing the conductive paste for an internal electrode may be a screenprinting method, a gravure printing method or the like, and is not limited thereto.

An average thickness te of the internal electrode 121 or 122 is not particularly limited and may be changed based on its purpose. The average thickness te of the internal electrode 121 or 122 may be 0.35 um or less to achieve the miniaturization of the multilayer electronic component 100, and the average thickness te of the internal electrode 121 or 122 may be 3 um or more to improve the reliability of the multilayer electronic component 100 under the high temperature and pressure.

The average thickness te of the internal electrode 121 or 122 may be an average value acquired by measuring their thicknesses at five equally spaced points after making, as a reference point, a point where the center line of the body in the length direction and the center line of the body in the thickness direction meet each other, and then determining the five equally spaced points including two points on the left and two points on the right, centered on this reference point, in the internal electrode layers having a total of five floors including upper two floors and lower two floors, centered on the internal electrode layer of one floor that is disposed at the point where the center line of the body in the length direction and the center line of the body in the thickness direction meet each other, among the internal electrode layers extracted from the image of the cross section of the multilayer electronic component 100 in the first-second direction that is polished to the center of the multilayer electronic component 100 in the third direction, which is scanned using the scanning electron microscope (SEM).

The first connection electrodes 131 and 132 may respectively be connected to the first internal electrode 121 on the two surfaces S3 and S4 of the stacked portion 10 oppose each other in the second direction, and the second connection electrodes 133 and 134 may respectively be connected to the second internal electrode 122 on the two surfaces S5 and S6 facing in the third direction of the stacked portion 10. The connection electrodes 131, 132, 133, and 134 may prevent the internal electrodes 121 and 122 from being in direct contact with the external electrodes 151 and 152. Accordingly, the connection electrode 131, 132, 133, or 134 may serve to improve moisture resistance reliability of the multilayer electronic component 100 by blocking or extending a moisture penetration path.

In one embodiment, shapes of the first connection electrodes 131 and 132 may be symmetric to each other about a center of the body 110, and shapes of the second connection electrodes 133 and 134 may be symmetric to each other about the center of the body 110.

The margin portion 141, 142, 143, or 144 may be disposed on the connection electrode 131, 132, 133, or 134. The margin portion 141, 142, 143, or 144 may partially cover the connection electrode 131, 132, 133, or 134. Here, a partial region of the connection electrode 131, 132, 133, or 134 that is not covered by the margin portion 141, 142, 143, or 144 may be in contact with the external electrode 151 or 152 on the surface of the body 110.

A material included in the connection electrode 131, 132, 133, or 134 is not particularly limited, and may use the material having the excellent electrical conductivity. For example, the connection electrode 131, 132, 133, or 134 may include at least one of nickel (Ni), copper (Cu), palladium (Pd), silver (Ag), gold (Au), platinum (Pt), tin (Sn), tungsten (W), titanium (Ti), and an alloy thereof. That is, the connection electrode 131, 132, 133, or 134 may include the same conductive metal as a conductive metal included in the internal electrode 121 or 122, is not limited thereto, and include a conductive metal different from the conductive metal included in the internal electrode 121 or 122.

A method of forming the connection electrode 131, 132, 133, or 134 and the margin portion 141, 142, 143, or 144 is not particularly limited. The connection electrode and the margin portion may be formed by pressing and adhering a unit sheet, in which a connection electrode formation sheet is formed on a margin portion formation sheet, to the two surfaces S3 and S4 of the stacked portion 10 that oppose each other in the second direction and the two surfaces S5 and S6 of the stacked portion 10 that oppose each other in the third direction, and then firing the same. The margin portion 141, 142, 143, or 144 may be made of the same material as that of the dielectric layer 111, is not limited thereto, and may be made of a material different from that of the dielectric layer 111.

Meanwhile, referring to FIG. 6A, the unit sheet may be prepared in such a way that the connection electrode 131, 132, 133, or 134 protrudes from the margin portion 141, 142, 143, or 144. However, due to fluidity of the sheet during a pressing, adhering, and firing process, the margin portion 141, 142, 143, or 144 may fill a groove caused by a protruding shape of the connection electrode 131, 132, 133, or 134.

Meanwhile, referring to FIG. 6B, the unit sheet may be prepared in such a way that the connection electrode 131, 132, 133, or 134 does not protrude due to a margin portion 141', 142', 143', or 144'. In this case, there is no need to fill the groove between the stacked portion 10 and the sheet, which may thus be advantageous to secure the adhesion between the stacked portion 10 and the sheet.

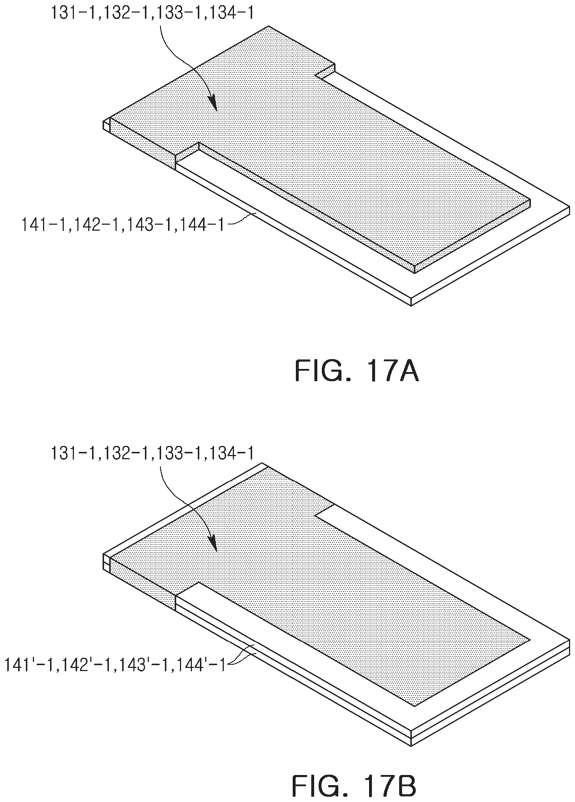

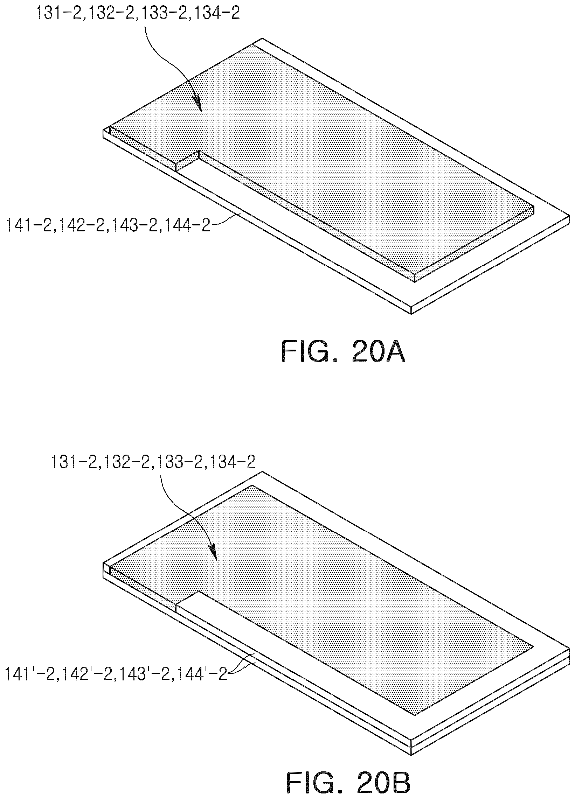

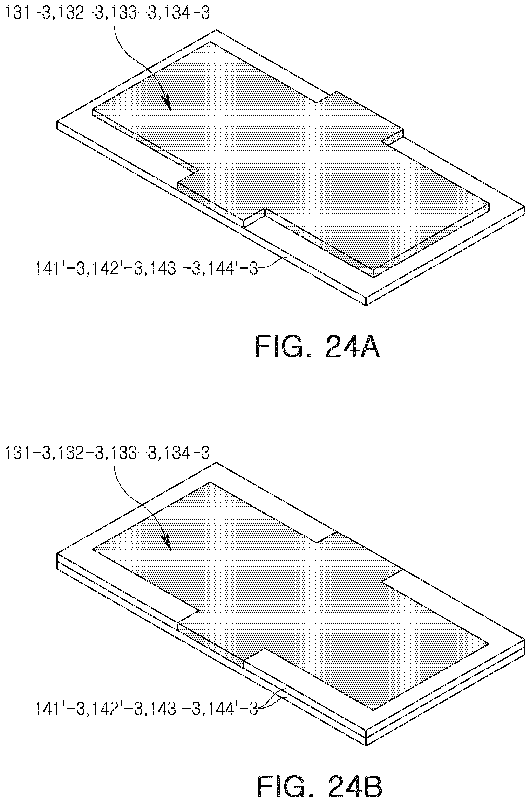

This shape of the unit sheet may also be applied to form a connection electrode 131-1, 132-1, 133-1, or 134-1 and margin portions 141-1, 142-1, 143-1, or 144-1 and 141'-1, 142'-1, 143'-1, or 144'-1 according to the first modified example shown in FIGS. 17A and 17B, connection electrode 131-2, 132-2, 133-2, or 134-2 and margin portions 141-2, 142-2, 143-2, or 144-2 and 141'-2, 142'-2, 143'-2, or 144'-2 according to the second modified example shown in FIGS. 20A and 20B, and a connection electrode 131-3, 132-3, 133-3, or 134-3 and margin portions 141-3, 142-3, 143-3, or 144-3 and 141'-3, 142'-3, 143'-3, or 144'-3 according to the third modified example shown in FIGS. 24A and 24B.

Meanwhile, the second margin portion 143 or 144 may cover an end of the first margin portion 141 or 142 in the third direction when the first margin portion 141 or 142 indicates the margin portion disposed on the first connection electrode 131 or 132, and the second margin portion 143 or 144 indicates the margin portion disposed on the second connection electrode 133 or 134. Accordingly, it is possible to further improve the moisture resistance reliability of the multilayer electronic component 100. A method of disposing the second margin portion 143 or 144 to cover the end of the first margin portion 141 or 142 in third direction is not icularly limited, and used is a method of first pressing, adhering, and attaching the unit sheet, on which the connection electrode formation sheet is formed on the margin portion formation sheet, to the two surfaces S3 and S4 of the stacked portion 10 that oppose each other in the second direction, and then attaching the unit sheet to the two surfaces S5 and S6 of the stacked portion 10 that oppose each other in the third direction.

The first internal electrode 121 may be exposed to the two surfaces S3 and S4 of the stacked portion 10 that oppose each other in the second direction, and the second internal electrode 122 may be exposed to the two surfaces S5 and S6 of the stacked portion 10 that oppose each other in the third direction, which may be advantageous to lower an equivalent series inductance (ESL) of the multilayer electronic component. However, the internal electrode may be vulnerable to external moisture or plating solution penetration in a conventional case of forming the external electrodes directly on the two surfaces S3 and S4 of the stacked portion 10 that oppose each other in the second direction and the two surfaces S5 and S6 that oppose each other in the third direction.

Accordingly, Patent Document 1 shows an attempt to improve the moisture resistance reliability of the multilayer electronic component by disposing a lead-out portion, which has a smaller width than the entire internal electrode, on the internal electrode and allowing the lead-out portion and the external electrode to be in direct contact with each other. However, forming the lead-out portion may not extend a length of the moisture or plating solution penetration path, which results in a limitation in improving the moisture resistance reliability of the multilayer electronic component.

On the other hand, the multilayer electronic component 100 in an exemplary embodiment of the present disclosure may include the main portion 131a, 132a, 133a, or 134a of the connection electrode 131, 132, 133, or 134 that is directly connected to the internal electrode 121 or 122 and the lead-out portion 131b, 132b, 133b, or 134b extending from the main portion 131a, 132a, 133a, or 134a in the first direction to thus extend the external moisture or plating solution penetration path, thereby improving its moisture resistance reliability, and improving electrical connectivity of the external electrode 151, 152, 153, or 154 and the internal electrode 121 or 122, which may also improve its effective capacitance.

In detail, referring to FIG. 3, the first connection electrode 131 or 132 according to an exemplary embodiment of the present disclosure may include the first main portion 131a or 132a in contact with at least a portion of the first internal electrode 121 and the first lead-out portion 131b or 132b extending from the first main portion 131a or 132a in the first direction, and the second connection electrode 133 or 134 according

to an exemplary embodiment may include the second main portion 133a or 134a in contact with at least a portion of the second internal electrode 122 and the second lead-out portion 133b or 134b extending from the second main portion 133a or 134a in the first direction.

Referring to FIG. 9, the first connection electrodes 131 and 132 may cover both ends of the first internal electrode 121 in the second direction, and the second connection electrodes 133 and 134 may cover both ends of the second internal electrode 122 in the third direction.

In an exemplary embodiment, the first internal electrode 121 may be exposed to the two surfaces S3 and S4 of the stacked portion that oppose each other in the second direction, and the second internal electrode 122 may be exposed to the two surfaces S5 and S6 of the stacked portion that oppose each other in the third direction. The first connection electrodes 131 and 132 may cover all the exposed ends of the first internal electrode 121, and the second connection electrodes 133 and 134 may cover all the exposed ends of the second internal electrode 122. In this way, it is possible to improve the connectivity between the internal electrode 121 or 122 and the connection electrode 131, 132, 133, or 134, and significantly improve the effective capacitance of the multilayer electronic component 100.

In an exemplary embodiment, the first main portions 131a and 132a may indicate regions respectively covering the ends of the first internal electrode 121 that are exposed by the two surfaces S3 and S4 of the stacked portion 10 that oppose each other in the second direction, and the second main portions 133a and 134a may indicate regions respectively covering the ends of the second internal electrode 122 that are exposed by the two surfaces S5 and S6 of the stacked portion 10 that oppose each other in the third direction.

The first lead-out portion 131b or 132b may indicate a region extending from the first main portion 131a or 132a in the first direction, and the second lead-out portion 133b or 134b may indicate a region extending from the second main portion 133a or 134a in the first direction. Referring to FIG. 3, the first and second lead-out portions 131b, 132b, 133b, and 134b are described as extending to both sides in the first direction, are not limited thereto, and may extend to one side or an opposite side in the first direction, as in a modified example described below.

The first connection electrodes 131 and 132 may be disposed on the two surfaces S3 and S4 of the stacked portion 10 that oppose each other in the second direction, and the second connection electrodes 133 and 134 may be disposed on the two surfaces S5 and S6 of the stacked portion 10 that oppose each other in the third direction. Here, the first connection electrode 131 or 132 and the second connection electrode 133 or 134 may be separated from each other. Accordingly, different voltages may be applied to the first internal electrode 121 and the second internal electrode 122.

Referring to FIGS. 2 and 8, the first lead-out portion 131b of the first connection electrode 131 disposed on one surface S3 of the two surfaces S3 and S4 of the stacked portion 10 that oppose each other in the second direction may be biased to one side of the first connection electrode 131 in the third direction, based on the center of the first connection electrode in the third direction, and the first lead-out portion 132b of the first connection electrode 132 disposed on the other surface S4 of the two surfaces S3 and S4 of the stacked portion 10 that oppose each other in the second direction may be biased to the other side of the first connection electrode 132 in the third direction, based on the center of the first connection electrode in the third direction. Likewise, the second lead-out portion 133b of the second connection electrode 133 disposed on one surface S5 of the two surfaces S5 and S6 of the stacked portion 10 that oppose each other in the third direction may be biased to one side of the second connection electrode 133 in the second direction, based on the center of the second connection electrode in the second direction, and the second lead-out portion 134b of the second connection electrode 134 disposed on the other surface S6 of the two surfaces S5 and S6 of the stacked portion 10 that oppose each other in the third direction may be biased to the other side of the second connection electrode 134 in the second direction, based on the center of the second connection electrode in the second direction. Here, the external electrode 151, 152, 153, or 154 may cover an edge of the body 110 that connects four or more surfaces of the body, thereby further improving the moisture resistance reliability of the multilayer electronic component 100, and also improving its mechanical strength.

Referring to FIG. 9, in an exemplary embodiment, the first lead-out portion 131b or 132b may have an average length shorter than that of the first main portion 131a or 132a, and the second lead-out portion 133b or 134b may have an average length shorter than that of the second main portion 133a or 134a. Accordingly, it is possible to improve lower moisture resistance reliability of the multilayer electronic component 100 while securing a contact area between the connection electrode 131, 132, 133, or 134 and the internal electrode 121 or 122.

It may be difficult to secure a sufficient junction area between the external electrode 151, 152, 153, or 154 and the connection electrode 131, 132, 133, or 134 when a ratio of an average length LL1 of the first lead-out portion 131b or 132b to an average length LC1 of the first main portion 131a or 132a is less than 0.05 or a ratio of an average length LL2 of the second lead-out portion 133b or 134b to an average length LC2 of the second main portion 133a or 134a is less than 0.05. On the other hand, it may insufficiently improve the moisture resistance reliability when the ratio of the average length LL1 of the first lead-out portion 131b or 132b to the average length LC1 of the first main portion 131a or 132a is more than 0.45 or the ratio of the average length LL2 of the second lead-out portion 133b or 134b to the average length LC2 of the second main portion 133a or 134a is more than 0.45.

Accordingly, in an exemplary embodiment, the ratio of the average length LL1 of the first lead-out portion 131b or 132b to the average length LC1 of the first main portion 131a or 132a may be 0.05 or more and 0.45 or less, and the ratio of the average length LL2 of the second lead-out portion 133b or 134b to the average length LC2 of the second main portion 133a or 134a may be 0.05 or more and 0.45 or less, thereby sufficiently securing the effective capacitance while improving the moisture resistance reliability of the multilayer electronic component 100.

Meanwhile, the "average length" of the main portion 131a, 132a, 133a, or 134a and that of the lead-out portion 131b, 132b, 133b, or 134b in an exemplary embodiment may be changed depending on which connection electrode is used for the measurement. In detail, the "average length" at the first connection electrode 131 or 132 may indicate an average size of the corresponding portions in the third direction, and the "average length" at the second connection electrode 133 or 134 may indicate an average size of the corresponding portions in the second direction.

Meanwhile, a method of measuring the "average length" of each of the main portion (131a, 132a, 133a, 134a) and the lead-out portion (131b, 132b, 133b, 134b) is not particularly limited. For example, the average length LC1 or LL1 of each of the first main portion 131a and the first lead-out portion 131b, respectively disposed on one surface of the two surfaces S3 and S4 of the stacked portion 10 that oppose each other in the second direction may be measured by polishing the multilayer electronic component 100 in the second direction to expose the first connection electrode 131, and then calculating an average value of size values of each of the first main portion 131a and the first lead-out portion 131b in the third direction, measured at three or more equally spaced points in the first direction, by using measuring equipment such as an optical microscope (OM) or the scanning electron microscope (SEM).

Referring to FIG. 10, in an exemplary embodiment, a ratio of an average thickness WC1 or WC2 of the connection electrode 131, 132, 133, or 134 to an average thickness WM1 or WM2 of the margin portion may be 0.03 or more and 0.50 or less.

The electrical connectivity between the internal electrode and the external electrode may be somewhat insufficiently secured using the connection electrode when the ratio of the average thickness WC1 or WC2 of the connection electrode 131, 132, 133, or 134 to the average thickness WM1 or WM2 of the margin portion is less than 0.03. When the ratio of the average thickness WC1 or WC2 of the connection electrode 131, 132, 133, or 134 to the average thickness WM1 or WM2 of the margin portion is more than 0.50, the connection electrode 131, 132, 133, or 134 may be disposed to be close to the surface of the body 110 to thus lower the moisture resistance reliability even though the connectivity between the internal electrode and the external electrode is improved through the connection electrode.

Therefore, as in an exemplary embodiment, when the ratio of the average thickness WC1 or WC2 of the connection electrode 131, 132, 133, or 134 to the average thickness WM1 or WM2 of the margin portion is 0.03 or more and 0.50 or less, it is possible to prevent the lower moisture resistance reliability while electrically connecting the internal electrode 121 or 122 and the external electrode 151, 152, 153, or 154 to each other through the connection electrode 131, 132, 133, or 134 of the multilayer electronic component 100.

In an exemplary embodiment, the measured "average thickness " of the margin portion 141, 142, 143, or 144 or the connection electrode 131, 132, 133, or 134 may be changed depending on which connection electrode is used for the measurement. In detail, the "average thickness " of the first connection electrode 131 or 132 may indicate an average size of the corresponding portions in the second direction, and the "average thickness " of the second connection electrode 133 or 134 may indicate an average size of the corresponding portions in the third direction.

Meanwhile, a method of measuring the "average thickness " of each of the main portion 141, 142, 143, or 144 and the connection electrode 131, 132, 133, or 134 is not particularly limited. For example, the average thickness WM1 of the margin portion 141 disposed on the first connection electrode 131 disposed on one surface of the two surfaces S3 and S4 of the stacked portion 10 that oppose each other in the second direction among the margin portions may be measured by polishing the multilayer electronic component 100 to its center to expose the first internal electrode 121 and the first connection electrode 131, and then calculating an average size value of the margin portions 141 in the second direction, measured at three or more equally spaced points in the third direction, by using the measuring equipment such as the optical microscope (OM) or the scanning electron microscope (SEM). Here, the average size value of the margin portion 141 in the second direction may refer to a distance between the surface S3 of the stacked portion 10 and the third surface 3 of the body 110.

The external electrodes 151, 152, 153, and 154 may be disposed on the body 110. The external electrodes 151, 152, 153, and 154 of the present disclosure may be electrically connected to the internal electrodes 121 and 122 through the connection electrodes 131, 132, 133, and 134.

A material included in the external electrode 151, 152, 153, or 154 is not particularly limited, and the external electrode may be made using any material as long as the external electrode has electrical conductivity, and its specific material may be determined by considering electrical property, structural stability, or the like, and may further have a multilayer structure.

The external electrode 151, 152, 153, or 154 may include an electrode layer in contact with the body 110 and a plating layer formed on the electrode layer.

For a more specific example of the electrode layer, the electrode layer may be a fired electrode including the conductive metal and glass, or a resin-based electrode including the conductive metal and resin.

In addition, the electrode layer may include the fired electrode and the resin-based electrode sequentially formed on the body. In addition, the electrode layer may be formed by transferring a sheet including the conductive metal to the body or by transferring the sheet including the conductive metal to the fired electrode.

The conductive metal included in the electrode layer may use the material having the excellent electrical conductivity, and is not particularly limited. For example, the conductive metal may be at least one of nickel (Ni), copper (Cu), and an alloy thereof.

The plating layer may serve to improve mountability of the multilayer electronic component. The plating layer is not limited to a particular type, may include at least one of nickel (Ni), tin (Sn), palladium (Pd) and an alloy thereof, or may include a plurality of layers.

For a more specific example of the plating layer, the plating layer may be a nickel (Ni) plating layer or a tin (Sn) plating layer, may have the nickel (Ni) plating layer and the tin (Sn) plating layer, sequentially formed on the electrode layer, or the tin (Sn) plating layer, the nickel (Ni) plating layer, and the tin (Sn) plating layer, sequentially formed on the electrode layer. In addition, the plating layer may include the plurality of Ni plating layers or the plurality of Sn plating layers.

The external electrodes 151, 152, 153, and 154 may be disposed on one or more of the surfaces 1, 2, 3, 4, 5, and 6 of the body 110 based on a shape of the connection electrode 131, 132, 133, or 134.

In detail, the external electrodes 151, 152, 153, and 154 may surround the edges of the body 110 when the first and second lead-out portions 131b, 132b, 133b, and 134b are exposed to two surfaces 1 and 2 of the body 110 that oppose each other in the first direction.

Meanwhile, the first and the second lead-out portions 131b, 132b, 133b, and 134b may extend in the second or third direction and pass through the margin portions. In this case, the first and second lead-out portions 131b, 132b, 133b, and 134b themselves may serve as the external electrodes, are not necessarily limited thereto, and even in this case, the external electrodes 151, 152, 153, and 154 may cover the first and second lead-out portions 131b, 132b, 133b, and 134b.

Meanwhile, the first and second lead-out portions 131b, 132b, 133b, and 134b may be exposed to only one surface of both the surfaces of the body 110 that oppose each other in the first direction. In this case, the external electrode 151, 152, 153, or 154 may surround a vertex of the body 110 where its three surfaces meet one another, is not necessarily limited thereto, and may cover only the exposed portion of the first or second lead-out portion 131b, 132b, 133b, or 134b.

Meanwhile, the first or second lead-out portion 131b, 132b, 133b, or 134b may be disposed in the center of the first or second main portion 131a, 132a, 133a, or 13a. In this case, the external electrode 151, 152, 153, or 154 may surround the edge of the body 110 where its two surfaces meet each other.

Hereinafter, the description describes in detail various exemplary embodiments of the present disclosure according to variations in the locations or shapes of the first and the second lead-out portions 131b, 132b, 133b, and 134b.

Referring to FIGS. 10 and 11, the first internal electrode 121 may be in contact with the first connection electrodes 131 and 132 simultaneously, and the second internal electrode 122 may be in contact with the second connection electrodes 133 and 134 simultaneously. Here, referring to FIGS. 12, 13 and 14, the first external electrode 151 or 152 may include the 1-1-th external electrode 151 disposed on one surface of two surfaces 3 and 4 of the body 110 that oppose each other in the second direction and connected to the first connection electrode 131, and the 1-2-th external electrode 152 disposed on the other surface of the two surfaces 3 and 4 of the body 110 that oppose each other in the second direction and connected to the first connection electrode 132. The second external electrode 153 or 154 may include the 2-1-th external electrode 153 disposed on one surface of the two surfaces S5 and S6 of the body 110 that oppose each other in the third direction and connected to the second connection electrode 133, and the 2-2-th external electrode 154 disposed on the other surface of the two surfaces S5 and S6 of the body 110 that oppose each other in the third direction and connected to the second connection electrode 134. Here, the 1-1-th external electrode 151, the 1-2-th external electrode 152, the 2-1-th external electrode 153, and the 2-2-th external electrode 154 may be spaced apart from one another. A separation distance between the 1-1-th external electrode 151, the 1-2-th external electrode 152, the 2-1-th external electrode 153, and the 2-2-th external electrode 154 may be 10 *µ*m or more. Accordingly, it is possible to prevent a short circuit occurring between the external electrodes 151, 152, 153, and 154.

The separation distance between the 1-1-th external electrode 151, the 1-2-th external electrode 152, the 2-1-th external electrode 153, and the 2-2-th external electrode 154 may indicate the minimum straight line distance between the external electrodes, and indicate the minimum straight line distance between the external electrodes that is measured on one surface of the two surfaces S1 and S2 of the multilayer electronic component 100 that oppose each other in the first direction by using the measurement equipment such as the optical microscope (OM) or the scanning electron microscope (SEM).

Meanwhile, a size of the multilayer electronic component 100 is not particularly limited. For example, the multilayer electronic component 100 may have a size of 0201 (i.e., length × width of 0.2 mm × 0.1 mm) or less in order to simultaneously achieve its miniaturization and high capacity. In a case of a product where its reliability in the high temperature and pressure environment is important, the multilayer electronic component 100 may have a size of 3216 (i.e., length × width of 3.2 mm × 1.6 mm) or more, and a size of the multilayer electronic component 100 is not limited thereto.

Referring to FIG. 1, T indicates the maximum size of the multilayer electronic component 100 in the first direction, and L indicates its maximum size in the second direction, and W indicates its maximum size in the third direction. In an exemplary embodiment, the maximum size T of the multilayer electronic component in the first direction may be 110 um or less. Accordingly, it is possible to implement a low-profile multilayer electronic component, and further lower the equivalent series inductance (ESL).

### First modified example

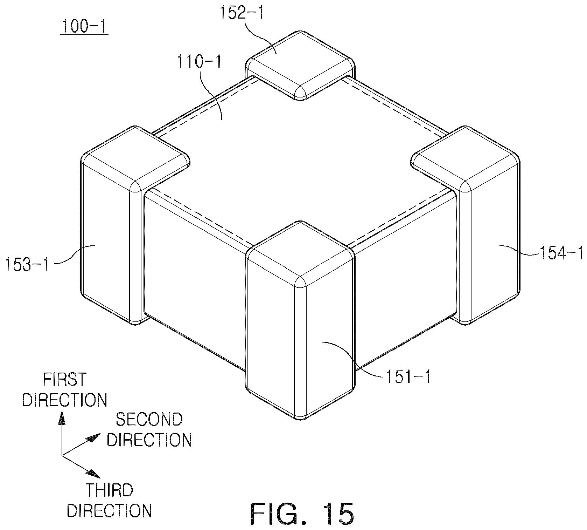

FIG. 15 is a perspective view schematically showing a multilayer electronic component according to a first modified example.

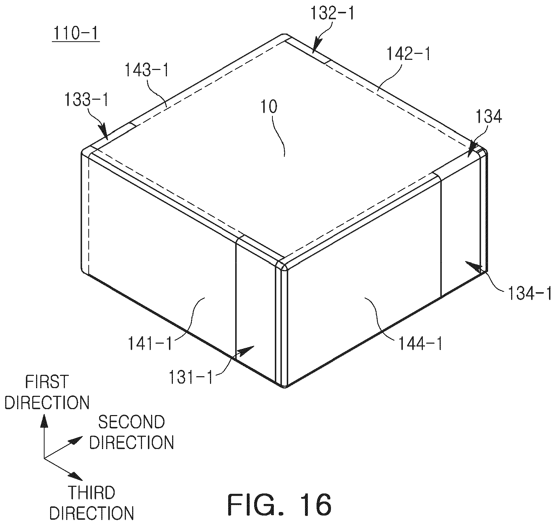

FIG. 16 is a perspective view schematically showing a component body according to the first modified example.

FIG. 17 is a perspective view schematically showing a shape of a connection electrode according to the first modified example.

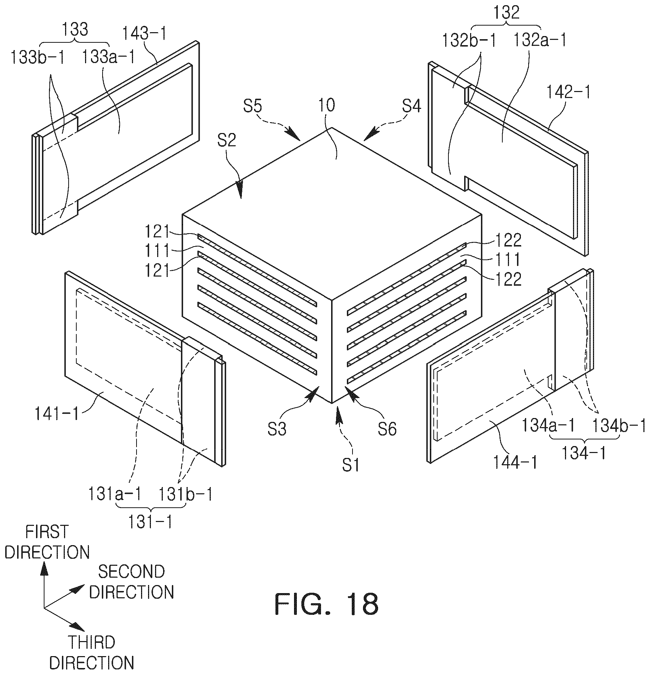

FIG. 18 is an exploded perspective view schematically showing a coupling relationship between the connection electrode and a stacked portion according to the first modified example.

Referring to FIGS. 16 to 18, a body 110-1 according to the first modified example may include the stacked portion 10, the connection electrode 131-1, 132-1, 133-1 or 134-1 disposed on the stacked portion 10, and the margin portion 141-1, 142-1, 143-1, or 144-1 disposed on the connection electrode 131-1, 132-1, 133-1, or 134-1. In this case, the margin portion 141-1, 142-1, 143-1, or 144-1 may cover only a portion of the connection electrode 131-1, 132-1, 133-1, or 134-1. In detail, the margin portion 141-1, 142-1, 143-1, or 144-1 may not cover the first or second lead-out portion 131b-1, 132b-1, 133b-1, or 134b-1. Accordingly, a portion of the connection electrode 131-1, 132-1, 133-1, or 134-1 may form a portion of a surface of the body 110-1.

Referring to FIG. 15, a multilayer electronic component 100-1 according to the first modified example may include an external electrode 151-1, 152-1, 153-1, or 154-1 disposed on the body 110-1.

According to the first modified example, a first lead-out portion 131b-1 or 132b-1 of the connection electrode may pass through a margin portion 141-1 or 142-1 in the second direction, and a second lead-out portion 133b-1 or 134b-1 may pass through a margin portion 143-1 or 144-1 in the third direction. In this case, as in the multilayer electronic component 100 according to an exemplary embodiment of the present disclosure, the external electrode 151-1, 152-1, 153-1, or 154-1 may surround a vertex of the body 110-1 where the three surfaces of the body 110-1 meet one another, and is not necessarily limited thereto. The first or second lead-out portion 131b-1, 132b-1, 133b-1, or 134b-1 may serve as the external electrode even without forming a separate external electrode.

In the first modified example, the first lead-out portion 131b-1 or 132b-1 may have a larger average size than the first main portion 131a-1 or 132a-1 in the second direction, and the second lead-out portion 133b-1 or 134b-1 may indicate a region where the second lead-out portion 133b-1 or 134b-1 has a larger average size than the second main portion 133a-1 or 134a-1 in the third direction . Meanwhile, referring to FIGS. 16 to 18, among the entire region of the first main portion 131a-1 or 132a-1, a region of the first main portion 131a-1 or 132a-1 that is in contact with the first lead-out portion 131b-1 or 132b-1 may have a larger average size than the other main portion region in the second direction, and among the entire region of the second main portion 133a-1 or 134a-1, a region of the second main portion 133a-1 or 134a-1 that is in contact with the second lead-out portion 133b-1 or 134b-1 may also have a larger average size than the other main portion regions in the third direction.

### Second modified example

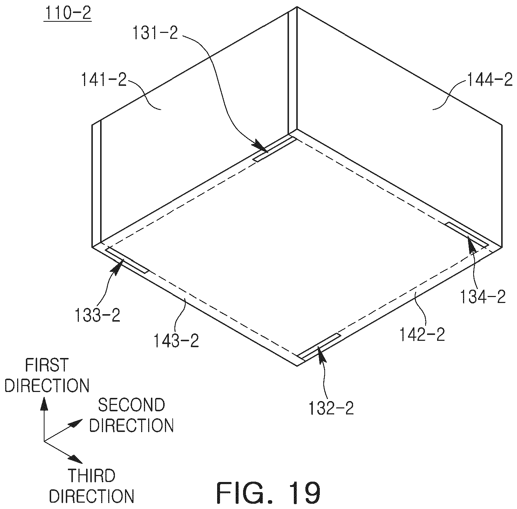

FIG. 19 is a perspective view schematically showing a component body according to a second modified example.

FIG. 20 is a perspective view schematically showing a shape of a connection electrode according to the second modified example.

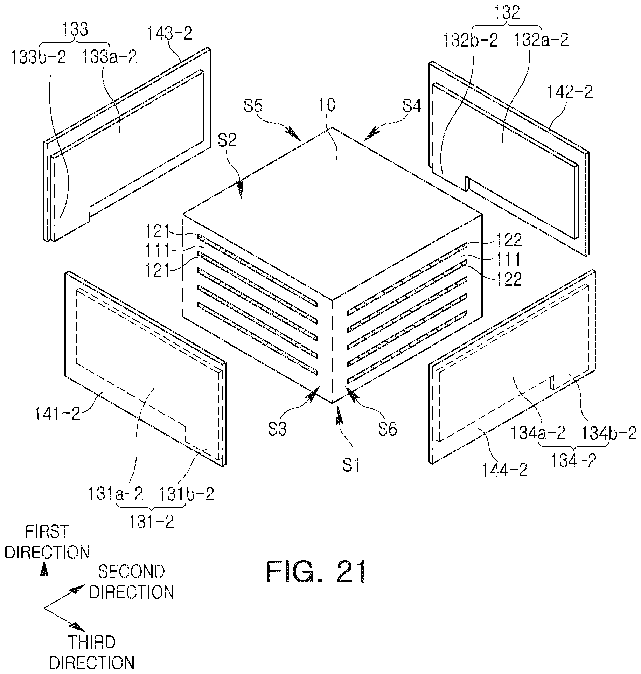

FIG. 21 is an exploded perspective view schematically showing a coupling relationship between the connection electrode and a stacked portion according to the second modified example.

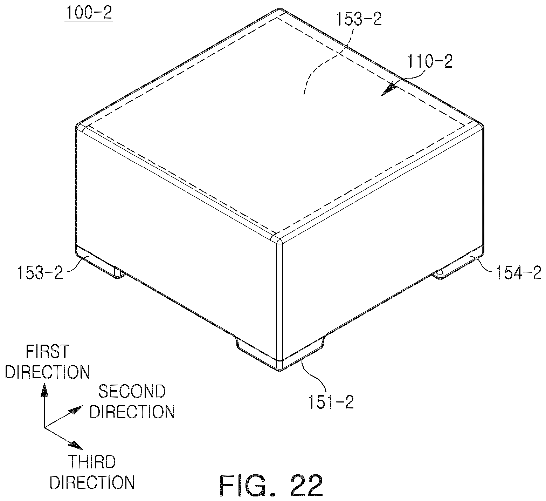

FIG. 22 is a perspective view schematically showing a multilayer electronic component according to the second modified example.

Referring to FIGS. 19 to 22, a body 110-2 according to the second modified example may include the stacked portion 10, a connection electrode 131-2, 132-2, 133-2, or 134-2 disposed on the stacked portion 10 and a margin portion 141-2, 142-2, 143-2, or 144-2 disposed on the connection electrode 131-2, 132-2, 133-2, or 134-2, and the external electrode 151-2, 152-2, 153-2, or 151-4 may be disposed on the body 110-2.

The connection electrode 131-2, 132-2, 133-2, or 134-2 according to the second modified example may include a main portion 131a-2, 132a-2, 133a-2, or 134a-2 in contact with at least a portion of the internal electrode 121 or 122, and a lead-out portion 131b-2, 132b-2, 133b-2, or 134b-2 extending from the main portion 131a-2, 132a-2, 133a-2, or 134a-2 in the first direction.

The lead-out portion 131b-2, 132b-2, 133b-2, or 134b-2 according to the second modified example may be in contact with the external electrode 151-2, 152-2, 153-2, or 154-2 only on one surface of the two surfaces of the body 110-2 that oppose each other in the first direction. In detail, the first lead-out portion 131b-2 or 132b-2 may be in contact with the first external electrode 151-2 or 152-2 only on one surface of the two surfaces of the body 110-2 that oppose each other in the first direction, and the second lead-out portion 133b-2 or 134b-2 may be in contact with the second external electrode 153-2 or 154-2 only on one surface of the two surfaces of the body 110-2 that oppose each other in the first direction. Accordingly, it is possible to minimize the maximum size of the entire multilayer electronic component 100-2 in the first direction.

Meanwhile, the external electrode 151-2, 152-2, 153-2, or 154-2 according to the second modified example may also be applied to the body 110 according to an exemplary embodiment. For example, in the body 110 according to an exemplary embodiment, the first and the second lead-out portions 131b, 132b, 133b, and 134b may be exposed to the two surfaces 1 and 2 of the body 110 that oppose each other in the first direction. In this case, the external electrodes 151, 152, 153, and 154 may be disposed only on the two surfaces 1 and 2 of the body 110 that oppose each other in the first direction.

Meanwhile, like the external electrodes 151-2, 152-2, 153-2, and 154-2 according to the second modified example, the external electrodes may be disposed only on two surfaces 1 and 2 of the body 110 that oppose each other in the first direction. In this case, the external electrode 151-2, 152-2, 153-2, or 154-2 may be a plating layer covering an end of the first lead-out portion 131b-2, 132b-2, 133b-2, or 134b-2 in the first direction. Accordingly, it is possible to further reduce the maximum size of the multilayer electronic component 100 in the first direction, and further lower its equivalent series inductance (ESL) through the low-profile.

### Third modified example

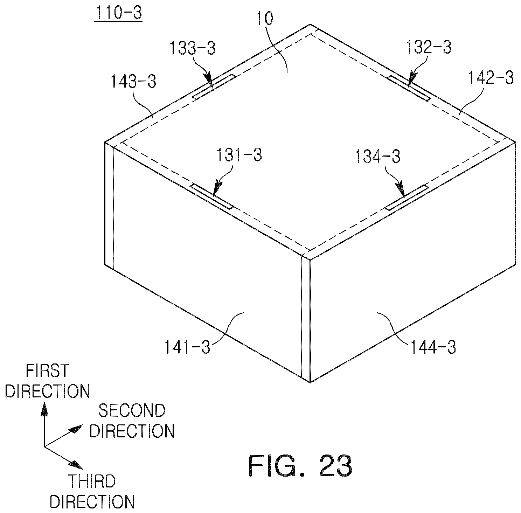

FIG. 23 is a perspective view schematically showing a component body according to a third modified example.

FIG. 24 is a perspective view schematically showing a shape of a connection electrode according to the third modified example.

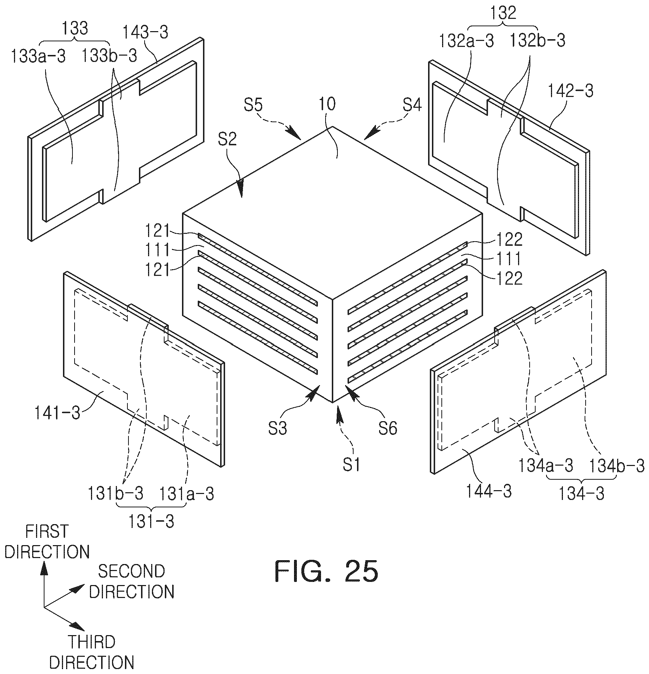

FIG. 25 is an exploded perspective view schematically showing a coupling relationship between the connection electrode and a stacked portion according to the third modified example.

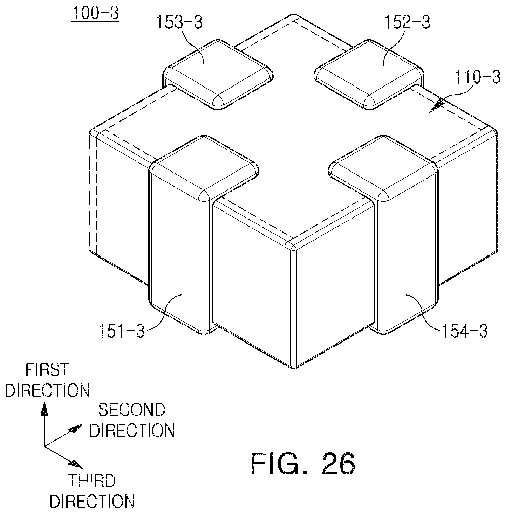

FIG. 26 is a perspective view schematically showing a multilayer electronic component according to the third modified example.

Referring to FIGS. 23 to 26, a body 110-3 according to the third modified example may include the stacked portion 10, a connection electrode 131-3, 132-3, 133-3 or 134-3 disposed on the stacked portion 10, and a margin portion 141-3, 142-3, 143-3, or 144-3 disposed on the connection electrode 131-3, 132-3, 133-3, or 134-3.

The connection electrode 131-3, 132-3, 133-3, or 134-3 according to the third modified example may include a main portion 131a-3, 132a-3, 133a-3, or 134a-3 in contact with at least a portion of the internal electrode 121 or 122, and a lead-out portion 131b-3, 132b-3, 133b-3, or 134b-3 extending from the main portion 131a-3, 132a-3, 133a-3, or 134a-3 in the first direction.

The first lead-out portion 131b-3 or 132b-3 according to the third modified example may be disposed between 1/3 and 2/3 points of the first main portion 131a-3 or 132a-3 in the third direction, and the second lead-out portion 133b-3 or 134b-3 may be disposed between 1/3 and 2/3 points of the second main portion 133a-3 or 134a-3 in the second direction.

Referring to FIG. 26, a multilayer electronic component 100-3 according to the third modified example may include an external electrode 151-3, 152-3, 152-3, or 154-3 disposed on the body 110-3. Accordingly, the external electrode 151-3, 152-3, 153-3, or 154-3 according to the third modified example may surround the edge of the body 110-3 where two surfaces of the six surfaces meet each other. Accordingly, it is possible to reduce a distance between the external electrodes included in each terminal, thereby further lowering the equivalent series inductance (ESL) in the present disclosure.

### Application example

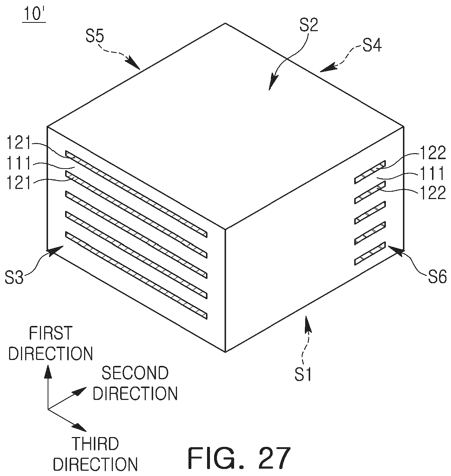

FIG. 27 is a perspective view schematically showing a stacked portion according to an application example.

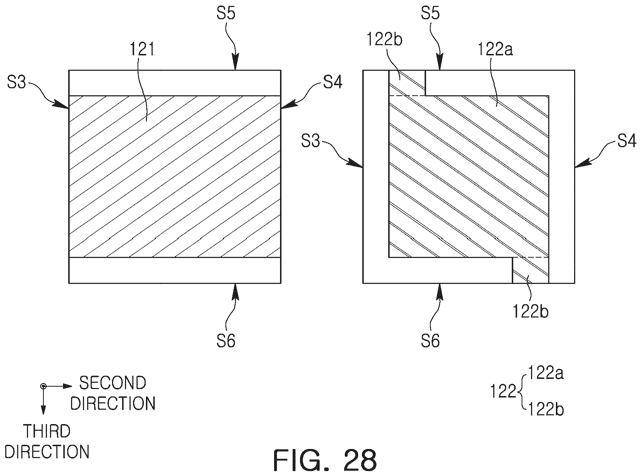

FIG. 28 is a plan view showing a shape of an internal electrode according to the application example.

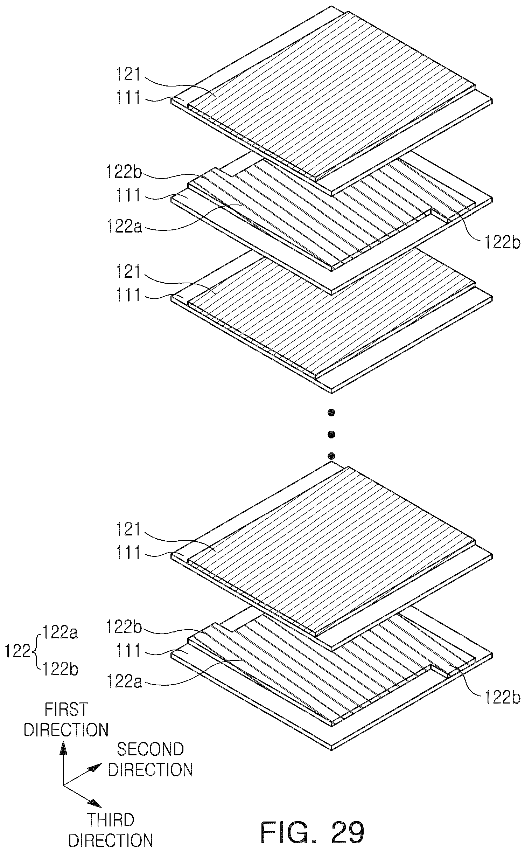

FIG. 29 is an exploded perspective view schematically showing shapes of a dielectric layer and the internal electrode included in the stacked portion according to the application example.

Hereinafter, a stacked portion 10' according to the application example is described in detail with reference to FIGS. 27 to 29. The stacked portion 10' according to the application example may be applied to all of the multilayer electronic component according to an exemplary embodiment described above and the multilayer electronic components 100-1, 100-2, and 100-3) according to the first to third modified examples.

Meanwhile, the stacked portion 10' according to the application example has a shape of the internal electrode 121 or 122 that is somewhat different from that of the stacked portion 10 according to an exemplary embodiment. Therefore, a description of a matter other than the different shape is omitted to avoid a redundant description.

The stacked portion 10' according to the application example may include the dielectric layer 111 and the first internal electrode 121 and the second internal electrode 122 alternately disposed in the first direction while having the dielectric layer 111 interposed therebetween.

Here, the first internal electrodes 121 may have substantially the same width as each other in the second direction, and the second internal electrode 122 may include a capacitance portion 122a overlapping the first internal electrode 121 in the first direction, and a lead-out portion 122b extending from the capacitance portion 122a in the third direction and having an average width smaller than that of the capacitance portion 122a.

The stacked portion 10' according to the application example may be applied to each of an exemplary embodiment, and the first to the third modified examples. In this case, the lead-out portion 122b having a small width may be formed on the second internal electrode 122 to thus further improve the moisture resistance reliability, and the first internal electrode 121 may maintain a shape of the internal electrode according to an existing exemplary embodiment to thus secure the connectivity between the internal electrode and the external electrode.

As set forth above, according to the exemplary embodiments of the present disclosure, the multilayer electronic component may have the lower equivalent series inductance (ESL).

The multilayer electronic component may have the improved moisture resistance reliability.

The multilayer electronic component may secure the sufficient effective capacitance.

The multilayer electronic component may secure the moisture resistance reliability and the sufficient effective capacitance even when using the multi-terminal structure having three or more terminals to low the equivalent series inductance (ESL).

While the exemplary embodiments have been shown and described above, it will be apparent to those skilled in the art that modifications and variations could be made without departing from the scope of the present disclosure as defined by the appended claims.

## Claims

1. A multilayer electronic component comprising:
a body including a stacked portion including a dielectric layer and a first internal electrode and a second internal electrode alternately disposed in a first direction while having the dielectric layer interposed therebetween, first connection electrodes respectively connected to the first internal electrode on two surfaces of the stacked portion that oppose each other in a second direction perpendicular to the first direction, second connection electrodes respectively connected to the second internal electrode on two surfaces of the stacked portion that oppose each other in a third direction perpendicular to the first or second direction, and margin portions respectively disposed on the first connection electrodes and the second connection electrodes;
first external electrodes respectively disposed on the body and connected to the first connection electrodes; and
second external electrodes respectively disposed on the body and connected to the second connection electrodes,
wherein at least one of the first connection electrodes includes a first main portion in contact with at least a portion of the first internal electrode and a first lead-out portion extending from the first main portion in the first direction, and
at least one of the second connection electrodes includes a second main portion in contact with at least a portion of the second internal electrode and a second lead-out portion extending from the second main portion in the first direction.

2. The multilayer electronic component according to claim 1, wherein the first connection electrodes cover both ends of the first internal electrode in the second direction, and
the second connection electrodes cover both ends of the second internal electrode in the third direction.

3. The multilayer electronic component according to claim 1, wherein a position of the first lead-out portion of the first connection electrode disposed on one surface of the two surfaces of the stacked portion that oppose each other in the second direction is biased to one side of the first connection electrode in the third direction, based on a center of the first connection electrode in the third direction,
a position of the first lead-out portion of the first connection electrode disposed on the other surface of the two surfaces of the stacked portion that oppose each other in the second direction is biased to the other side of the first connection electrode opposite to the one side of the first connection electrode in the third direction, based on the center of the first connection electrode in the third direction,
a position of the second lead-out portion of the second connection electrode disposed on one surface of the two surfaces of the stacked portion that oppose each other in the third direction is biased to one side of the second connection electrode in the second direction, based on a center of the second connection electrode in the second direction, and
a position of the second lead-out portion of the second connection electrode disposed on the other surface of the two surfaces of the stacked portion that oppose each other in the third direction is biased to the other side of the second connection electrode opposite to the one side of the second connection electrode in the second direction, based on the center of the second connection electrode in the second direction.

4. The multilayer electronic component according to claim 1, wherein a ratio of an average length of the first lead-out portion in the third direction to an average length of the first main portion in the third direction is 0.05 or more and 0.45 or less, and
a ratio of an average length of the second lead-out portion in the third direction to an average length of the second main portion in the third direction is 0.05 or more and 0.45 or less.

5. The multilayer electronic component according to claim 1, wherein a ratio of an average thickness of the first connection electrode to an average thickness of the margin portion is 0.03 or more and 0.50 or less, and
a ratio of an average thickness of the second connection electrode to an average thickness of the margin portion is 0.03 or more and 0.50 or less.

6. The multilayer electronic component according to claim 1, wherein the first lead-out portion is in contact with the first external electrode on one or more surfaces of two surfaces of the body that oppose each other in the first direction, and
the second lead-out portion is in contact with the second external electrode on one or more surfaces of the two surfaces of the body that oppose each other in the first direction.

7. The multilayer electronic component according to claim 1, wherein the first external electrode includes a 1-1-th external electrode disposed on one surface of two surfaces of the body that oppose each other in the second direction and connected to the first connection electrode, and a 1-2-th external electrode disposed on the other surface of the two surfaces of the body that oppose each other in the second direction and connected to the first connection electrode,
the second external electrode includes a 2-1-th external electrode disposed on one surface of two surfaces of the body that oppose each other in the third direction and connected to the second connection electrode, and a 2-2-th external electrode disposed on the other surface of the two surfaces of the body that oppose each other in the third direction and connected to the second connection electrode, and
the 1-1-th external electrode, the 1-2-th external electrode, the 2-1-th external electrode, and the 2-2-th external electrode are spaced apart from one another.

8. The multilayer electronic component according to claim 1, wherein the margin portions include a first margin portion disposed on the first connection electrodes, and a second margin portion disposed on the second connection electrodes and covering an end of the first margin portion in the third direction.

9. The multilayer electronic component according to claim 1, wherein a maximum size of the multilayer electronic component in the first direction is 110 um or less.

10. The multilayer electronic component according to claim 1, wherein the first lead-out portion extends in the second direction to pass through the margin portion, and
the second lead-out portion extends in the third direction to pass through the margin portion.

11. The multilayer electronic component according to claim 10, wherein the first lead-out portion has a larger average size than the first main portion in the second direction, and the second lead-out portion has a larger average size than the second main portion in the third direction.

12. The multilayer electronic component according to claim 10, wherein the margin portion does not cover the first or second lead-out portion and
wherein the first external electrode is a plating layer covering an end of the first lead-out portion in the first direction, and
the second external electrode is a plating layer covering an end of the second lead-out portion in the first direction.

13. The multilayer electronic component according to claim 1, wherein the first lead-out portion is in contact with the first external electrode on only one surface of two surfaces of the body that oppose each other in the first direction, and
the second lead-out portion is in contact with the second external electrode on only one surface of the two surfaces of the body that oppose each other in the first direction.

14. The multilayer electronic component according to claim 1, wherein the first lead-out portion is disposed between 1/3 and 2/3 points of the first main portion in the third direction, and
the second lead-out portion is disposed between 1/3 and 2/3 points of the second main portion in the second direction.

15. The multilayer electronic component according to claim 1, wherein the first internal electrode is provided in plural and a plurality of first internal electrodes have substantially the same width as each other in the second direction, and
the second internal electrode includes a capacitance portion overlapping the first internal electrode in the first direction, and a lead-out portion extending from the capacitance portion in the third direction and having an average width smaller than that of the capacitance portion.
